# EUROPEAN PATENT SPECIFICATION

(11) **EP 3 452 638 B1**
(45) Date of publication and mention of the grant of the patent: **18.03.2020**
(21) Application number: 17737200.0
(22) Date of filing: 04.05.2017
(51) Int. Cl.: C25B 15/00, C25B 15/08, C25B 1/04, C25B 9/00, C25B 9/10

(54) **HYDROGEN PRODUCING APPARATUS**
WASSERSTOFFHERSTELLUNGSVORRICHTUNG
APPAREIL DE PRODUCTION D'HYDROGÈNE

(30) Priority: 04.05.2016 GB 201607787; 14.02.2017 GB 201702381
(43) Date of publication of application: 13.03.2019
(73) Proprietor: Katholieke Universiteit Leuven, 3000 Leuven (BE); Universiteit Gent, 9000 Gent (BE)
(72) Inventor: BAETS, Roeland, 9800 Deinze (BE); BOSSEREZ, Tom, 1851 Humbeek (BE); MARTENS, Johan, 3040 Huldenberg (BE); RONGÉ, Jan, 3090 Overijse (BE); TROMPOUKIS, Christos, 1040 Etterbeek (BE)
(74) Representative: DenK iP
(86) International application number: PCT/BE2017/000028
(87) International publication number: WO 2017/190202

(56) References cited:
- WO-A1-2015/013776
- US-A1- 2005 000 792
- US-A1- 2013 026 029
- SUDESH KUMARI ET AL: "Solar hydrogen production from seawater vapor electrolysis", ENERGY & ENVIRONMENTAL SCIENCE, vol. 9, no. 5, 10 March 2016 (2016-03-10), pages 1725-1733, XP055396091, ISSN: 1754-5692, DOI: 10.1039/C5EE03568F

## Description

### 1. Background and Summary

### 1.1. BACKGROUND OF THE INVENTION

### A. Field of the Invention

The present invention relates generally to the field of vapour phase water electrolysis, and in particular, to an improvement thereof by engaging such with photovoltaic (PV) systems and integrating thermal and water management into said system.

### B. Description of the Related Art

The production of one of the simplest molecules, hydrogen (H₂), from water and sunlight is an attractive option for storing renewable energy. Proton exchange membrane (PEM) electrolysis is an already commercialized concept for hydrogen generation, with proven cost effective capabilities in various industrial applications such as cooling power plant turbine generators, semiconductor processing and chromatography, among others. However, for the specific application of hydrogen for energy generation, the cost has to decrease further. The cost breakdown of a 3 cell stacks system with the corresponding power supply banks resulting in a production equal to 13kg/day reveals the major contribution of the cell stacks on the capital cost. More precisely, 53% of cost is attributed to the cell stack, from which the flow fields and separators have the major contribution.¹ Moreover, the wet systems for which liquid water is needed for their operation will be a hurdle in regions with limited water supply. Any competition with the agriculture sector, where water scarcity has great relevance, should be avoided. Therefore, there is a need in the art to provide an efficient way for generating hydrogen with water from ambient air humidity as reagent and light as energy source.

Alkaline electrolysis is the most mature technology today and there are a few drawbacks which make their operation difficult. They operate in concentrated alkaline electrolyte (5-10M KOH) which directly poses stringent material property requirements for encapsulation of the device, Additionally, these high concentrated electrolytes are able to absorb CO₂ from the atmosphere to form insoluble species such as K₂CO₃ which precipitate inside the device and block the porous electrodes, leading to reduced performance. Moreover, alkaline electrolysers work at high current densities which lead to bubble formation on the electrode surfaces.

To prevent cross-over of products, pressure at anode and cathode compartment has to be equal at all times, which is not the case for these systems. This makes their operation (start-up and shut-down) less flexible.

The water feed requirements are also very stringent. To avoid fouling of the membrane, extra pure water with low ionic concentrations is needed. This requires additional energy, making the device less energy efficient.

Document WO 2015/013776 discloses a two-chamber electrolizer including a water adsorbing microporous material in contact with an electrode. Similarly, document US 2013/026029 discloses a photo-anode with water adsorbing microporous material separated thereof by an exchange membrane. However, in both cases the electrodes need to absorb radiation, e.g. sunlight, so the microporous material (or membranes) of the electrode, e.g. between anode and cathode, are vulnerable to drying out.

Present invention solves these above mentioned problems. It provides an assembly of a PV module and a two compartment electrolysis apparatus which is made using low cost methods and devices. The apparatus uses water present in outside air as a reagent for hydrogen production. The circadian shifts of outdoors abiotic conditions subjects the apparatus of present invention to various conditions. Present invention solves that problem. For keeping a satisfactory level of hydration while maintaining a device operation at sufficient temperatures, this invention provides a well-designed temperature and hydration management system/strategy. During the day, sunlight is heating up a heat absorber/collector directly connected to a reversible water sorption material, thereby inducing water release from said material to a cathode compartment and diffusion of water through the ion exchange material, thereby wetting it. Water is oxidized/reduced at the anode/cathode and H₂ is collected while O₂ is released into air. While in operation during the night, cool humid air circulates through the device and the reversible water sorption material replenishes. Such device reaches a solar to hydrogen efficiency above 5%.

### 1.2. SUMMARY OF THE INVENTION

The present invention solves the problems of the related art by a water splitting apparatus, comprising a radiation absorbing material (for heat absorber/collector element especially designed for efficient absorbing light energy and for releasing it as heat) specifically a heat sink, an array of electrically connected space separated solar cells encapsulated in a light transparent insulator that lays on heat sink, a reversible water sorption material (for instance element that comprises a material especially designed from absorbing water vapour from ambient air and releasing it when heated) whereby the reversible water sorption material contacts the radiation absorbing material for heat exchange, specifically the heat sink lays on the reversible water sorption material, and whereby the reversible water sorption component for water vapour exchange at another side contacts a reaction unit whereby the reaction unit further comprises a reduction reaction gas unit in part or in total formed or occluded by a porous cathode a water oxidation reaction gas unit in part or in total formed or occluded by a porous anode and whereby the porous cathode and the porous anode are separated by an ion exchange material, for example so that the ion exchange material is intermediate between cathode and anode.

In yet another embodiment the inventions solves the problems of the related art by an electro-reaction apparatus, comprising 1) a radiation absorbing material (for instance such heat absorber/collector element especially designed for efficient absorbing light energy and for releasing it as heat), 2) a reversible water sorption material (for instance element that comprises a material especially designed from absorbing water vapour from ambient air and releasing it when heated) whereby the reversible water sorption material is contacting the radiation absorbing material for heat exchange, 3) a reduction reaction gas unit at one site contacting for water vapour exchange with a permeable element to the reversible water sorption material and at another side contacting with a porous cathode to an ion exchange material to allow water vapour and ion exchange and 4) a water oxidation reaction gas unit contacting at another side with a porous anode to the ion exchange material and further characterised in that reduction reaction gas unit comprises the reversible water sorption material for instance as a wall or the reduction reaction gas unit shares a permeable enclosing element with said the reversible water sorption material and whereby the water oxidation reaction gas unit at least one inlet for ambient air so that when the absorbing element is radiated the reversible water sorption material releases water vapour into the reduction reaction gas unit and when not radiated the reversible water sorption material absorbs water from a hydrated vapour atmosphere.

In accordance with the purpose of the invention, as embodied and broadly described herein, the invention is broadly drawn to a water splitting apparatus, comprising 1) a radiation absorbing material (for instance such heat absorber/collector element especially designed for efficient absorbing light energy and for releasing it as heat), 2) a reversible water sorption material whereby the reversible water sorption material is connected with the radiation absorbing material for heat exchange, 3) a reduction reaction gas unit at one site connected for water vapour exchange with a permeable element to the reversible water sorption material and at another side connected with a porous cathode to an ion exchange material to allow water and ions to pass and 4) a water oxidation reaction gas unit connected at another side with a porous anode to the ion exchange material so that the ion exchange material is intermediate between cathode and anode or to an electro-reaction apparatus, comprising 1) a radiation absorbing material, 2) a reversible water sorption material whereby the reversible water sorption material is contacting the radiation absorbing material for heat exchange, 3) a reduction reaction gas unit at one site contacting for water vapour exchange with a permeable element to the reversible water sorption material and at another side contacting with a porous cathode to an ion exchange material to allow water vapour and ions to pass and 4) a water oxidation reaction gas unit contacting at another side with a porous anode to the ion exchange material and further characterised in that reduction reaction gas unit shares a permeable enclosing element with said the reversible water sorption material and the water oxidation reaction gas unit at least one inlet for ambient air so that when the absorbing element is radiated the reversible water sorption material releases water vapour into the reduction reaction gas unit and when not radiated the reversible water sorption material absorbs water from an aqueous vapour atmosphere.

In one aspect of the invention, such apparatus here above described is characterised in that the reduction reaction gas unit shares a vapour permeable enclosing element with said reversible water sorption material.

Another particular embodiment of the invention is that the gas unit is a chamber, container or enclosure. In yet another embodiment the ion exchange material is an alkaline membrane. Optimal function is obtained when the water oxidation reaction gas unit is adapted to function as a convection gas conduit because it is an elongated container or enclosure with at least one aperture at one extended side and with at least one aperture at another extend side of said water oxidation reaction gas unit container.

The reversible water sorption material comprises a material especially designed for absorbing water from ambient air and releasing it when heated. Suitable materials for such function are any of the following: a hygroscopic substance, a hydrophilic material, a hydrophilic powder, a porous hydrophilic material, a mesoporous hydrophilic material, a microporous hydrophilic material or a mixed microporous / microporous hydrophilic material.

The radiation absorbing material especially designed to absorb radiation comprises one of the materials of the group consisting of black fused silica, materials having increasing melting points, heat-resistant metal, heat resistant polymer comprising ferrous iron and glass comprising ferrous iron.

The anode and cathode are electrically connected with a source of electricity whereby in the embodiment of present invention of engaging the electro-reactor apparatus with photovoltaic (PV) systems this is characterized in that the radiation absorbing material contacts or is connected with an array of eclectically connected space separated solar cells encapsulated in a glass and a light transparent insulator so that light irradiates the solar cells and the radiation absorbing material. Such solar cells or arrays of solar cells are electrically connected to anode and cathode.

The above described invention has particular advantages that by using ion exchange materials (for instance a polymer ion exchange materials (PEM) and air as a water source, the need of using KOH is eliminated so that device degradation due to corrosive materials is eliminated. Device degradation due to the use of corrosive liquid concentrated electrolytes such as KOH is a problem in the art.

Another particular advantage of the present invented apparatus is that only low or no impurity levels are maintained in the apparatus. By using ion exchange materials (for instance a polymer ion exchange materials (PEM) and air as a water source, the need of using KOH is eliminated. In the art there is a decrease in performance due to the reaction of KOH. with CO2 in air to make carbonates such as K₂CO₃ (insoluble).

Yet another particular advantage of present is that no increased pressure is required on either sides of the apparatus (in either of the gas reaction units). Using air as a feedstock there is no need for operation at high pressures as PEM electrolysis. In the art pressure increase on either side of the membrane results in difficulty in start-up and shutdown.

The apparatus of present invention has no bubble formation. The absence of liquid water eliminates this problem. Bubble formation in liquid electrolysers at high current densities (> 1 A/cm²) is a problem in the art.

The apparatus of present invention can be made as a lightweight and low cost device since by its use of air as the feedstock for water electrolysis, the need of pipes for water supply is eliminated. The devices of the art are heavy and expensive devices due to the use of water piping and compressors system.

The apparatus of present invention has no or only limited poisoning at the membrane.² By using air as the feedstock for water electrolysis, the need of high purity water is eliminated. The devices of the art need high purity water and water purifiers in order to avoid poisoning of the membrane.

In the art for vapour phase electrolysis, under a convected flow with 100% RH, a limited current density (40 mA/cm²) is reached due to mass transport problems. The apparatus of present invention allows to use such high current densities, even when the ambient RH is lower than 100%, due to incorporation of water adsorbing materials which ensure enough water supply. The apparatus of present invention allows higher activity and therefore higher efficiencies achieved. For instance when operational the reversible water adsorption material releases water by enhanced temperature due to absorption of light therefore keeping the relative humidity (RH) high. By the design of present invention high relative humidity is achieved up to RH 100%.

The apparatus of present invention prevents damage due to water frost, by resorption of water vapour by the reversible water sorption material during the night cycle and due to adsorption heat generated by the reversible water sorption material. Frost is a problem in the art of solar-driven hydrogen producing units.³

Further scope of applicability of the present invention will become apparent from the detailed description given hereinafter.

Some embodiments of the invention are set forth directly below:
Present invention concerns an apparatus or a member of an electro-reaction apparatus **(22),** comprising 1) a radiation absorbing material or component comprising such material **(4),** 2) a reversible water sorption material or component comprising such material **(5),** whereby the reversible water sorption material or component comprising such material **(5)** is connected with or contacts a radiation absorbing material or component comprising such material **(4)** for heat exchange and whereby the reversible water sorption material or component comprising such material **(5)** for water vapour exchange at another side is connected with or contacts a reaction unit whereby the reaction unit further comprises a reduction reaction gas unit **(6)** formed by a porous cathode **(7)** and a water oxidation reaction gas unit **(10)** formed by a porous anode **(9)** separated by an ion exchange material or component comprising such material **(8)** to allow water and ions to pass.

In a particular embodiment in this apparatus or apparatus element the reversible water sorption material or component comprising such material **(5)** is at the other side connected with the porous cathode **(7)** so the that reversible water sorption material or component comprising such material **(5)** forms the reduction reaction gas unit **(6)** and whereby the porous cathode **(7)** is in turn being connected with or contacting the ion exchange material or component comprising such material **(8)** to allow water and ions to pass and at the other side of the ion exchange material or component comprising such material **(8),** a water oxidation reaction gas unit **(10)** is connected with or contacts a porous anode **(9)** so that the ion exchange material or component comprising such material **(8)** is intermediate between cathode **(7)** and anode **(9).**

In yet another particular embodiment in this apparatus or apparatus clement the reversible water sorption material or component comprising such material **(5)** is at the other side connected with the porous anode **(9)** so the that reversible water sorption material or component comprising such material **(5)** forms the oxidation reaction gas unit **(10)** and whereby the porous anode **(9)** is in turn being connected with or contacting the ion exchange material or component comprising such material **(8)** to allow water and ions to pass and at the other side of the ion exchange material or component comprising such material **(8)**, a water reduction reaction gas unit **(6)** is connected with or contacts a porous cathode **(7)** so that the ion exchange material or component comprising such material **(8)** is intermediate between anode **(9)** and cathode **(7).**

In yet another particular embodiment in this apparatus or apparatus element the reversible water sorption material or component comprising such material **(5)** is at the other side connected with the porous cathode **(7)** so the that reversible water sorption material or component comprising such material **(5)** forms the reduction reaction gas unit **(6)** and whereby the porous cathode **(7)** is in turn being connected with or contacting the ion exchange material or component comprising such material **(8)** that at the other side is connected with or contacts a porous anode **(9)** so that the ion exchange material or component comprising such material **(8)** is intermediate between cathode **(7)** and anode **(9)** to allow water and ions to pass through the ion exchange material or component comprising such material **(8),** and whereby porous cathode **(7)** forms the water oxidation reaction gas unit **(10).**

In yet another particular embodiment in this apparatus or apparatus element comprises 1) a radiation absorbing material or component comprising such material **(4),** 2) a reversible water sorption material or component comprising such material **(5)** whereby the reversible water sorption material or component comprising such material **(5)** is connected with the radiation absorbing material or component comprising such material **(4)** for heat exchange, 3) a reduction reaction gas unit **(6)** at one side connected for water vapour exchange with the reversible water sorption material or component comprising such material **(5)** and at another side connected with a porous cathode **(7),** in turn connected with an ion exchange material or component comprising such material **(8)** to allow water and ions to pass and **4)** at the other side of the ion exchange material or component comprising such material **(8),** a water oxidation reaction gas unit **(10)** connected with a porous anode **(9)** so that the ion exchange material or component comprising such material **(8)** is intermediate between cathode **(7)** and anode **(9).**

The apparatus or apparatus element of present invention can be characterised in that the water oxidation reaction gas unit **(10)** is connected for water vapour exchange with the reversible water sorption material or component comprising such material **(5)** and at another side connected with a porous anode **(9),** in turn connected with an ion exchange material or component comprising such material to allow water and ions to pass and at the other side of the ion exchange material or component comprising such material **(8),** a reduction reaction gas unit **(6)** connected with a porous cathode **(7)** so that the ion exchange material or component comprising such material **(8)** is intermediate between anode and cathode.

In yet another particular embodiment this apparatus or apparatus element of present invention is characterised in that the radiation absorbing material or component comprising such material **(4)** which radiation absorbing material or component comprising such material **(4)** lays on the reversible water sorption material or component comprising such material **(5),** the reversible water sorption material or component comprising such material **(5)** forming a wall of the reduction reaction gas unit **(6),** whereby the reduction reaction gas unit **(6)** comprises the a porous cathode **(7)** as wall, and whereby and intermediate ion exchange material or component comprising such material **(8)** separates the porous cathode **(7)** and porous anode **(9)** and whereby the porous anode **(9)** forms a wall with the water oxidation reaction gas unit **(10).** The above described apparatus elements can be connected with an array of electrically connected space separated solar cells encapsulated in a light transparent insulator lays on the radiation absorbing material or component comprising such material **(4)** which radiation absorbing material or component comprising such material **(4)** lays on the reversible water sorption material or component comprising such material **(5).** Furthermore this can be in a particular embodiment be characterised in that the water oxidation reaction gas unit **(10)** comprises at least one inlet for ambient air so that when the radiation absorbing material or component comprising such material **(4)** is radiated the reversible water sorption material or component comprising such material **(5)** releases water vapour into the reduction reaction gas unit **(6)** and when not radiated the reversible water sorption material or component comprising such material **(5)** absorbs water from an aqueous vapour atmosphere.

In general the water to pass the ion exchange material or component comprising such material is water vapour.

Particular adaptations on the apparatus or apparatus element of present invention can be as follows; the reaction unit is a chamber, container or enclosure; the gas unit **(6, 10)** is a chamber, container or enclosure; the ion exchange material or component comprising such material **(8)** is an anion exchange material or component comprising such material; ion exchange material or component comprising such material **(8)** is an cation exchange material or component comprising such material; the water oxidation reaction gas unit (10) is adapted to function as a convection gas conduit because it is an elongated container or enclosure with at least one aperture at one extended side and with at least one aperture at another extended side of said water oxidation reaction gas unit **(10)** container; the water oxidation reaction gas unit **(10)** and the reduction gas unit have to possibility to be sealed; the reduction gas unit **(6)** comprises a vent which comprises self-opening and self-closing closure, for instance a self-opening or self-closing lid, shutter or cover for opening or closing said vent.

In a particular embodiment a programmable regulator or actuator functionally connected to the closure. This regulator or actuator can be programmed to open the closure for water adsorption by the reversible water sorption material or component comprising such material **(5)** or close the closure for preventing dehydration of the reversible water sorption material or component comprising such material **(5)** depending on the humidity in the ambient air surrounding said apparatus. This regulator or actuator can be programmed to open the closure during the night for water adsorption by the reversible water sorption material or component comprising such material **(5)** and to close the closure during the day thereby preventing dehydration of the reversible water sorption material or component comprising such material **(5).** Furthermore in a particular embodiment the apparatus further comprising a humidity sensor functionally and or a light sensor connected to said regulator or actuator.

Other specific embodiments of the apparatus of apparatus element of present invention is such whereby the radiation absorbing material or component comprising such material **(4)** does not comprise a phase transition material.

Particular suitable, for instance for transportation, is the embodiment of present invention whereby the reversible water sorption material or component comprising such material **(5)** is demountable so that it can be replaced by another reversible water sorption material or component comprising such material **(5)** with the same, similar or other capabilities.

In present invention the reversible water sorption material or component comprising such material **(5)** can comprise one of the following; hygroscopic substances, hydrophilic material, hydrophilic powder, a porous hydrophilic material, a mesoporous hydrophilic material, a microporous hydrophilic material, a mixed microporous / microporous hydrophilic material, a material that exhibits a reversible changing hydrophilicity in function of temperature. In present invention the reversible water sorption material or component comprising such material **(5)** can also comprises one of the materials of the group consisting of copper, aluminium, iron, stainless steel, black fused silica, materials having increasing melting points, heat-resistant metal, heat resistant polymer comprising ferrous iron and glass comprising ferrous iron.

Other embodiments of the apparatus of present invention are that he anode **(9)** ana cathode **(7)** are electrically connected with a source of electricity, that the radiation absorbing material or component comprising such material **(4)** contacts or is connected with an array of eclectically connected space separated solar cells encapsulated in a light transparent insulator so that light irradiates the solar cells and the radiation absorbing material or component comprising such material **(4),** that the radiation absorbing material or component comprising such material **(4)** is a heat sink, that series of solar cells or arrays of solar cells whereby series of solar cells or arrays of solar cells are electrically connected to anode **(9)** and cathode **(7),** and/or that series of solar cells or arrays of solar cells, whereby the solar cells or arrays of solar cells are comprised in an unit that is demountable from the hydrogen producing unit

This apparatus according to any one of the previous embodiments is particular useful and can be used for oxygen and hydrogen production from ambient air.

### 2. DETAILED DESCRIPTION OF EMBODIMENTS OF THE INVENTION

### 2.1. Definitions

The term "water splitting" means the reversible cleavage of water into its constituents, oxygen (O₂) and hydrogen (H₂). Water splitting is achieved by many different technologies of which electrolysis is an example. Water splitting by electrolysis is achieved by applying electric energy on two electrodes, termed anode and cathode. The anode is positively charged and splits water into oxygen, protons (H⁺) and electrons (e⁻). Electrons are transported through an electrical wire to the cathode. Protons are transferred to the cathode through the water which contains a salt to carry this ion current. The cathode is negatively charged and brings together electrons and protons to form molecular hydrogen gas.

The term "electro-reaction apparatus" (ERA) means an apparatus that performs any electrochemical reaction, both galvanic as well as electrolytic reactions, and includes water electrolysis reaction, carbon dioxide reduction reaction and other electrolytic reactions but also fuel cell reactions and other galvanic reactions.

The term "porous" means any form of macro-, meso- and micro-porosity and includes pores of all shapes and dimensions. The compound for which a material is porous, can be in any physical state such as liquid, vapour or solid.

The term "radiation-absorbing clement" means an element comprising a material that is specifically constructed for such a purpose, and includes material such as copper, aluminium, iron, stainless steel or heat resistant polymer or glass containing quantities of ferrous iron or other material selected to provide a similar effect The term "radiation" encompasses radiation across the electromagnetic spectrum, including infrared, visible light, and ultraviolet radiation. The term "reversible water sorption material "means an element comprising a material that is able to adsorb water from vapour phase such as air and is able to release the adsorbed water again. Adsorption and desorption happen in different conditions such as variation in temperature or relative humidity. Such mentioned materials can be any type of meso- or microporous materials such as carbon, silica, molecular sieves, zeolites or metal organic frameworks (MOF) or a combination thereof.

In the present application, a radiation absorbing material, a reversible water sorption material or an ion exchange material is in the meaning of respectively a radiation absorbing material or a component comprising such material, a reversible water sorption material or a component comprising such material or an ion exchange material or a component comprising such material

### 2.2. Detailed description

The following detailed description of the invention refers to the accompanying drawings. The same reference numbers in different drawings identify the same or similar elements. Also, the following detailed description does not limit the invention. Instead, the scope of the invention is defined by the appended claims.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms fust, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter, it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to the devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding the understanding of one or more of the various inventive aspects. This method of disclosure, however, is not to be interpreted as reflecting an intention that the claimed invention requires more features than are expressly recited in each claim. Rather, as the following claims reflect, inventive aspects He in less than all features of a single foregoing disclosed embodiment Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art For example, in the following claims, any of the claimed embodiments can be used in any combination.

Of the sustainable energy sources which arc available nowadays, solar energy is the only source that has in theory the potential to meet all our energy needs. Although photovoltaic technology, converting sunlight into electricity, has been widely developed, it is incapable of storing the produced energy. As the contribution of solar energy to the total energy production increases, electricity network operators will eventually reach their limit to cope with the intermittent nature of solar power (day/night cycle, clouds). Storing solar energy in chemical bonds offers the desired practical and compact type of energy conversion, i.e. high energy storage densities and ease of transportation. The production of one of the simplest molecules, hydrogen (H₂), from water and sunlight is an attractive option.

Alkaline electrolysis is the most mature technology today. However they have a few drawbacks which makes their operation difficult. They operate in concentrated alkaline electrolyte (5-10M KOH) which directly supposes stringent material property requirements for encapsulation of the device. Additionally these high concentrated electrolytes are able to absorb CO₂ from the atmosphere to form insoluble species such as K₂CO₃ which precipitate inside the device and block the porous electrodes, leading to reduced performance.⁴ Moreover, alkaline electrolysers work at high current densities which lead to bubble formation on the electrode surfaces.⁵ Proton exchange membrane (PEM) electrolysis is an already commercialized concept for hydrogen generation, with proven cost effective capabilities in various industrial applications such as cooling power plant turbine generators, semiconductor processing and chromatography, among others. However, for the specific application of hydrogen for energy generation, the cost has to further decrease. The cost breakdown of a 3 cell stacks system with the corresponding power supply banks resulting in a production equal to 13kg/day reveals the major contribution of the cell stacks on the capital cost. More precisely, 53% of cost is attributed to the cell stack, from which the flow fields and separators have the major contribution.¹ Moreover, most concepts are based on wet systems for which the need of liquid water for their operation could be a hurdle in regions with limited water supply. Any competition with the agriculture sector where water scarcity has great relevance should be avoided.

To prevent cross-over of products, pressure at anode and cathode compartment has to be equal at all times, which is not the case for these systems. This makes their operation (start-up and shut-down) less flexible.

The water feed requirement are also very stringent. To avoid fouling of the membrane, extra pure water with low ionic concentrations is needed. This requires additional energy, making the device less energy efficient.

To overcome the aforementioned drawbacks such as costs, design and water availability, present invention concerns an apparatus adapted not to require the use of highly concentrated liquids and recirculation equipment as is the case with conventional photovoltaic-electrolysis (PV-E) systems. The design of the apparatus of present invention is based on using moisture contained in outside air as a water source. Water supply management is very simple, since air supply is achieved by natural convection. With 10% solar-to-hydrogen efficiency such installation will consume water at a rate of ca 20 g m⁻² h⁻¹ to generate ca 2 g m⁻² h⁻¹ of hydrogen, or an energy equivalent of240 kJ m⁻² h⁻¹. The minimum needed air volume at 20 °C, 1013 hPa and 60% relative humidity then is ∼2 m³ h⁻¹ m⁻². Even in the Sahel desert, at an average relative humidity of about 20% and temperatures of 29 °C, one cubic meter of air contains 6 g water. Additionally, frost protection will not be needed while avoiding to jeopardise local fresh water supplies. All these advantages of air-fed water splitting cells of the apparatus of present invention arguments for a paradigm shift for the development of the specific technology.

The air-fed PV-E device of present invention will serve the following functions:
i) adsorption of water from air and absorption of photons from the sun,
ii) the photogenerated current will enable the net oxidation of water to ions and oxygen,
iii) transport of ions through the ion exchange material (IEM)
iv) Evolution of hydrogen in the second compartment in absence of air.

### 2.3. Examples on the device, description/operation

It has been reported that in the presence of highly active electro catalysts, the onset potential for electrolysis occurred at higher voltage for liquid compared to gaseous water feedstock. When low current densities are required then the use of water vapour may be preferable compared to liquid water as the feedstock.⁶

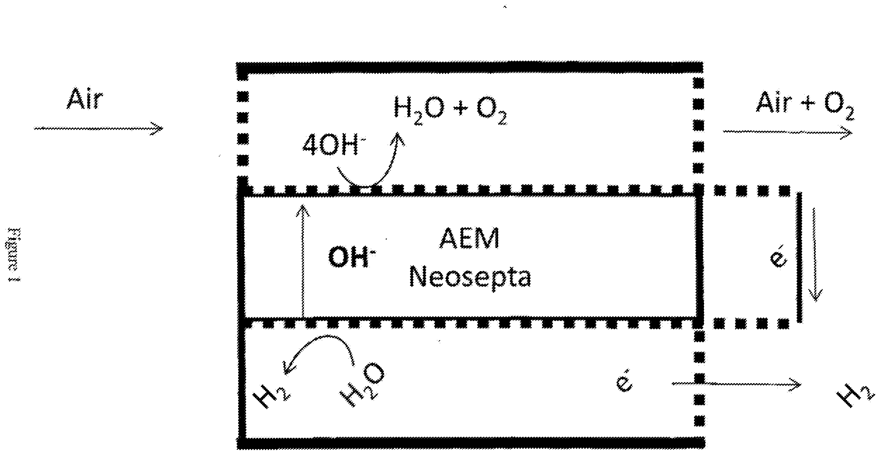

However, the relative humidity (RH) of the gas stream is expected to have a strong impact on the operation of the air-fed water splitting system. Moreover, the dehydration of the membrane should be avoided since this impacts the ionic conductivity. It has been shown for acidic electrolysis systems, that when low RH values are at the cathode side, the electrolyser performed somewhat better, a result which was expected since the decomposition of H₂O molecules occurs at the anode side in acidic electrolysis system.⁶ Therefore, high water concentration should be maintained in the anode side. This is only the case when the operations are done using acidic ion exchange materials. We focus but not limit on alkaline anion exchange materials as solid electrolyte, as Earth-abundant catalysts generally are less stable in acid environment. The influence of film thickness, relative humidity and temperature on ionic and water transport and product gas permeability has important consequences for the final device architecture. As is clear from Figure 1 and eqn. (1) and (2), there is a net consumption of water at the cathode. Water from ambient air at the anode can diffuse trough the IEM to the cathode side. Keeping the IEM of the air-fed PV-E cell hydrated may prove critical in its development Therefore, a strategy consists of incorporating water capturing materials in the IEM or in the cathode compartment itself

Anode: 4*OH⁻* → 2*H*₂*O* + *O*₂ + 4*e*⁻ (1)

Cathode: 4*H*₂*O* + 4*e*⁻ → 4*OH*⁻ + 2*H*₂ (2)

There are indications, based on previous experimental results and electrolyser models using Butler-Volmer kinetics, that increased temperature leads to higher current densities for a given applied bias.^{7,8} Additionally, greater water content is present in fully humidified gas at higher temperature, which may raise the limiting current density of electrolysis sustained by water vapour. As discussed previously¹, water management and hydration of the membrane became increasingly critical at higher operating temperatures with RH <100%. As a result, the membrane was dehydrated and consequently resulting in a large decrease in the electrolysis current density. Therefore, targeting an operation with water vapour at higher temperatures requires either a scheme to keep the membrane hydrated or the use of an alternative ionomer that is less sensitive to its water content.

For keeping the cathode sufficiently hydrated and the operation of the device at sufficient temperatures, a well-designed temperature and hydration management system/strategy is provided: a) at the solar cell level, existing solar cell technologies provide the required potential to drive the water splitting reactions while allowing sufficient light to pass, b) a radiation-absorbing element provides the required temperature in order to heat up c) a reversible water sorption material which arc used in order to provide enough hydration to d) the ion exchange material and e) at the IEM, a day/night altering operation take place to dehydrate/rehydrate the membrane by use of a reversible water sorption material while hydrogen is produced by solar water splitting during the day.

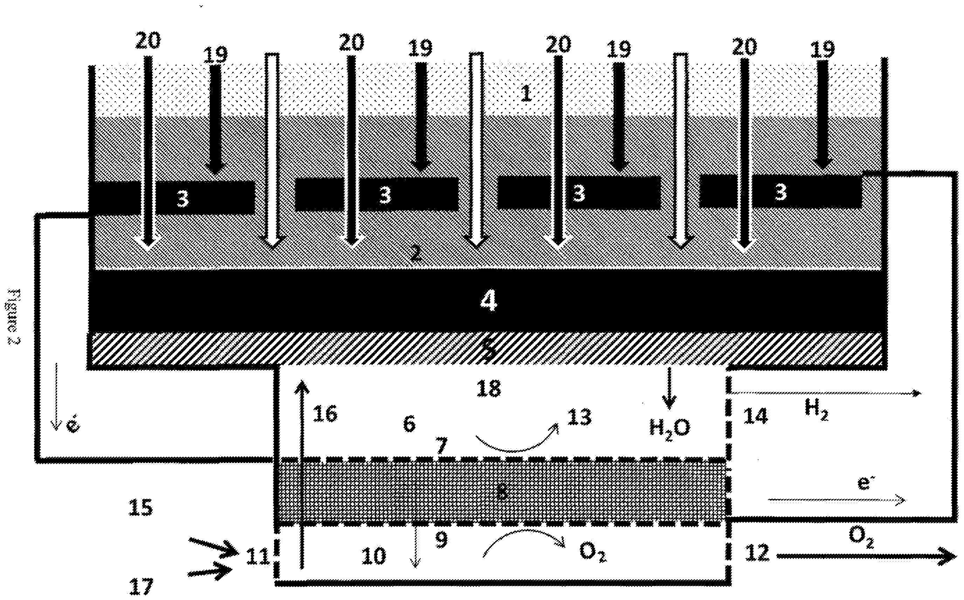

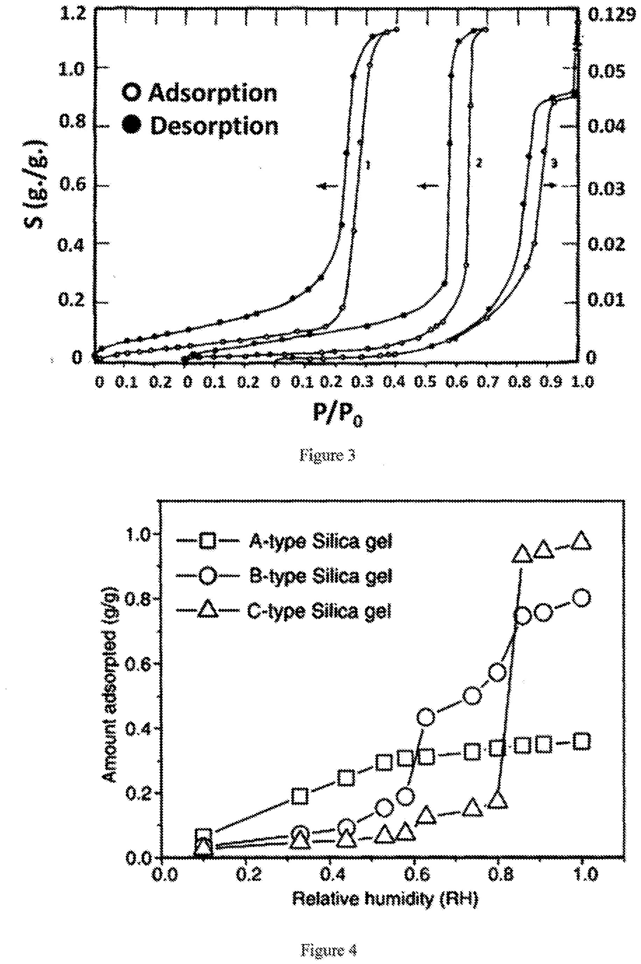

### a) Solar cell level (Figure 2, 3):

For providing the voltage which is required so as to drive the water splitting reactions, existing solar cell technologies can be used. Apart from the output voltage, allowing sufficient light to pass in order to heat up the heat absorber/collector is an additional prerequisite. This is done either at the solar cell level or at the module level. At the cell level, various solar cell technologies with the possibilities ranging from 200 um thick crystalline silicon (c-Si) wafer based solar cells with efficiencies up to 18-20% to thin-film inorganic (amorphous and microcrystalline silicon) or organic solar cells with efficiencies between 6-14% could be used (M. A. Green et al.. "Solar cell efficiency tables (Version 45)", Prog. Photovolt. Res. Appl. 23(1), 1-9 (2015).)..

At the module level, and for c-Si wafer based technologies, the solar cells are normally connected in series (Figure 2, displayed under number 3) and they are encapsulated in a configuration including glass (Figure 2, displayed under number 1) and EVA (ethyl vinyl acetate) (Figure 2, displayed under number 2). Instead of the tedlar (polyvinyl fluoride film) back sheet normally placed on the back side, we use a material that acts as the radiation-absorbing element, a function which is described in details in the following section. With the operating temperature of a module being the balance between a) the heat produced by the module which depends on the operating point of the module, its optical properties and the packing density of the cells, b) the heat lost to the environment via conduction, convection and radiation and c) the ambient operating temperature, we use a relaxed solar cell packing density. i.e. the area of the module that is covered with solar cells compared to that which is blank, for enabling the highest possible heating of the heat collector. Therefore, photons with wavelengths covering the full solar spectrum may be used to heat up the radiation-absorbing element radiation-absorbing element (Figure 2, 4):

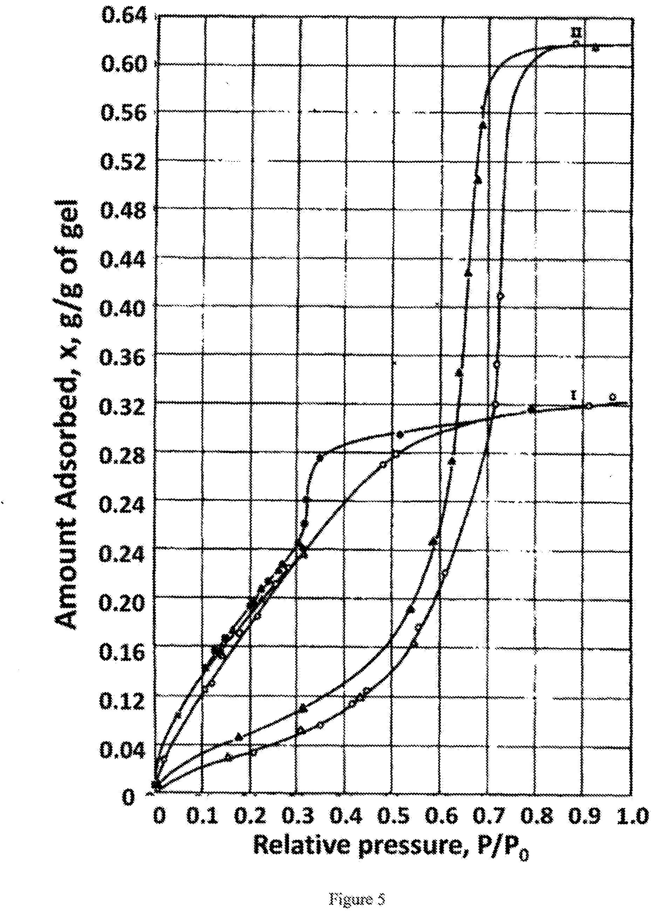

The purpose of the radiation-absorbing element is twofold. On one hand, it cools down the PV module and therefore improve its electrical performance. On the other hand, it collects the thermal energy which is produced and which would have otherwise been lost as heat to the environment. Instead of losing this energy, we use it to heat up a radiation-absorbing element (Figure 2, 4), a concept which is taken advantage of in technologies such as the PV/thermal hybrid systems. The radiation-absorbing element performs three functions: i) absorb the maximum possible amount of solar irradiance, ii) conduct the absorbed heat into the reversible water sorption material (Figure 2, 5) and finally iii) lose a minimum amount of heat back to the environment. Materials with high radiation absorptance and high thermal conductivity, normally used in the PV/T hybrid solar devices, such as copper, aluminium, iron, stainless steel etc. are considered.

### b) Reversible water sorption materials (Figure 2, 5)

The reversible water sorption materials materials are meso- or micro-porous materials such as carbon, silica, molecular sieves, zeolites or metal organic frameworks (MOF) or a combination thereof.

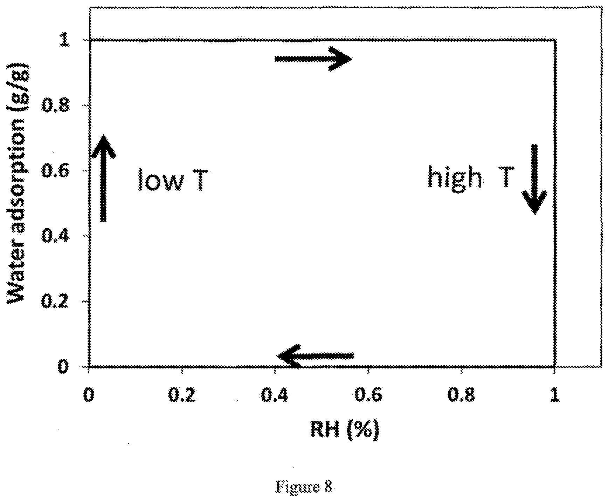

The materials are synthesized and tuned as such that they are able to adsorb and desorb water at the RH and T values of the specific geographic location (changes in climate). This can be achieved by combination of different materials or by surface modification or change in pore size distribution. An ideal material can be described as follows (Figure 8). At low RH values the material must adsorb water molecules sufficiently fast to become saturated with water over the duration of one night (*ca* 10 h). For desorption the material must be able to desorb its water capacity already at relatively high RH values, in order to keep RH in the reaction chambers high during the day. Temperature-driven hysteresis between adsorption and desorption must be as large as possible to maintain a large water capacity. That is, adsorption will occur during night at temperature below 20 °C and desorption will occurring during the day under irradiation, at a temperature likely higher than 30 °C. The temperature increase shifts the water sorption isotherm to lower water contents and enhances desorption kinetics. ⁹ The kinetics of the ad- and desorption process must be sufficiently fast as to keep the electrolysis system saturated with vapour at all times. In reality, no material as described in Figure 8 exists. In practice, any material which adsorbs water at RH below 80 % and desorbs water at RH above 70 % can be used.

Such a reversible water sorption material could also be used as a drying agent when temperatures are so low that frost becomes an issue. This can protect the device from damage due to expansion of water into ice crystals.

### e) Ion exchange materials (Figure 2,8)

The ion exchange materials can be alkaline membranes such as Fumasep FAB (Fumatech), FAA-3-PK-130 (Fumatech), AMX (Astom), AHA (Astom). It can be any materials based on a polymer backbone combined with cation exchange groups such as ammonium, phosphonium or sulfonium groups The ion exchange material can also be an acidic membrane such as Nafion, other perfluorinated polymers, sulfonated hydrocarbons or yet other equivalents.

### d) IEM day/night operation (fig.2):

The adsorption and desorption is regulated by a change in temperature and of the relative humidity in the cathode chamber. This can be achieved by the natural change in temperature and relative humidity of a day/night cycle (Figure 2, displayed under numbers 15-18):

### 1) Day: Operation

During the day, light not absorbed by the solar cell (Figure 2, displayed under number 20) is absorbed by the thermal collector (Figure2, displayed under number 4) which directs its heat to the reversible water sorption material. The reversible water sorption material (Figure 2, displayed under number 5), situated in the closed reduction chamber (Figure 2, displayed under number 6), starts to heat up and releases its water to the reduction chamber due to a drop in RH and/or a shift of its water sorption characteristics, thereby increasing the local relative humidity. As water is consumed at the cathode (Figure 2, displayed under number 7) in alkaline water splitting, the increase in RH ensures a constant supply of water. In acidic water splitting the same concept can be used with the reversible water sorption material connected to the anode chamber.

Simultaneously the water oxidation chamber (Figure 2, displayed under number 10) is closed to the ambient environment. Depending on the location, the RH of the ambient air is lower or equal to the RH of the cathode chamber. When RH is low, water from the reduction chamber is drawn to the water oxidation chamber by electro-osmosis through the membrane (Figure 2, displayed under number 8), thereby wetting it and ensuring its ionic conductivity. In addition, water is formed as the reaction product at the water oxidation compartment, thereby locally wetting the membrane. The water is produced from hydroxide ions originating from the reduction of water molecules at the reduction compartment.

### 2) Night: Regeneration

During the night, RH increases and temperature drops. Additionally, no light is absorbed and thus the thermal collector (Figure 2, displayed under number 4) is at ambient temperature. The reversible water sorption material (Figure 2, displayed under number 5) starts to cool down, RH starts to increase and when the oxidation chamber is open to the ambient environment, the sorption material draws in water from the ambient air, by diffusive transport through the membrane, due to a difference in RH. This way, the reversible water sorption material is able to regenerate with water for operation during the day.

The produced hydrogen will likely be saturated with water (80% RH at 50°C), however this will be lower when compared to conventional electrolysis (100% at 80°C). For further use of the produced hydrogen, it is preferred for the hydrogen to be partially or completely dry. In another embodiment of the invention, the hydrogen producing chamber can be equipped with a pressure relieve valve. This valve can open upon an increased pressure inside the hydrogen producing chamber due to increase in hydrogen partial pressure, This pressure relieve valve is a way of collecting hydrogen from the compartment and in another embodiment this valve can be opened and closed manually with a regulator or actuator. In another embodiment, this pressure relieve valve is in its turn connected to an intermediate chamber with another reversible water sorption material inside. The purpose of this chamber is to partially or completely dry the produced hydrogen for further use in e.g. a fuel cell.

In the description provided herein, numerous specific details are set forth. However, it is understood that embodiments of the invention may be practiced without these specific details. In other instances, well-known methods, structures and techniques have not been shown in detail in order not to obscure an understanding of this description.

Other embodiments of the invention will be apparent to those skilled in the art from consideration of the specification and practice of the invention disclosed herein.

It is intended that the specification and examples be considered as exemplary only.

Each and every claim is incorporated into the specification as an embodiment of the present invention. Thus, the claims are part of the description and are a further description and are in addition to the preferred embodiments of the present invention.

Each of the claims set out a particular embodiment of the invention.

The following terms are provided solely to aid in the understanding of the invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Thus, the claims following the detailed description are hereby expressly incorporated into this detailed description, with each claim standing on its own as a separate embodiment of this invention.

### 2.4. Examples

### Example 1: Vapour phase water electrolysis at high RH

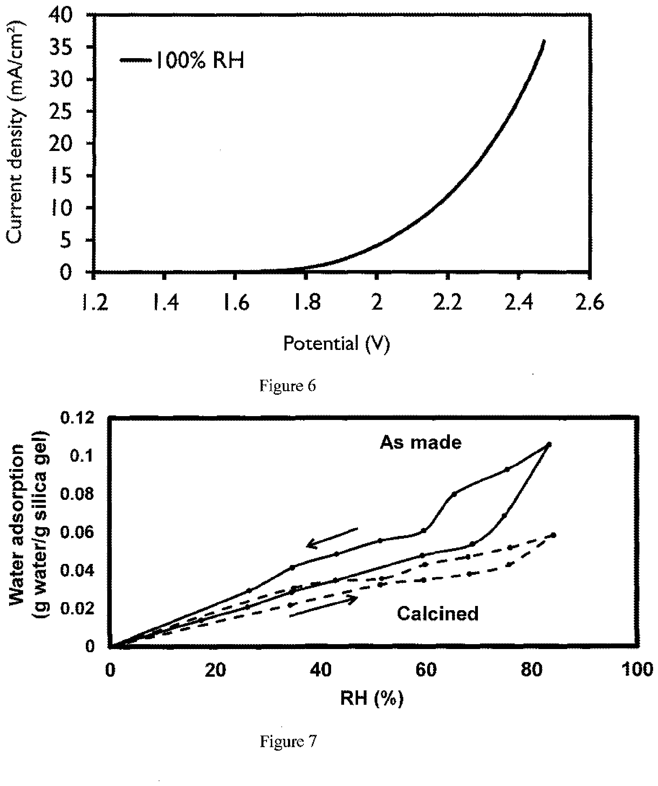

A vapour phase water electrolysis experiment was performed using the possible embodiments of the invention. A membrane electrode assembly consisting of nickel (Ni) foam as the anode material, Ni foam as the cathode material and an anion exchange membrane (FAD-PET-130, Fumasep) were combined to form a membrane electrode assembly (MEA). This MEA was tested for water electrolysis at 100% RH by cyclic voltammetry. Figure 6 shows the result of this experiment. A current density of 10 mA cm² can be achieved at an applied potential of 2.09 V.

### Example 2: Silica get as revenible water sorption material

Silica gel was tested as a reversible water sorption material (Figure 6). In a magnetic suspension balance (MSB), silica gel powder (SG 239) was placed in dry conditions. An as made SG 239 as well as a calcined SO 239 were tested. Both mesoporous SG samples had a pore size of 10.25 nm. The RH value was changed over time and the change in weight was measured. The calcined sample showed reduced water capacity which is likely due to a decrease in surface silanol groups.

### 2.5. BRIEF DESCRIPTION OF THE DRAWINGS

The present invention will become more fully understood from the detailed description given herein below and the accompanying drawings which are given by way of illustration only, and thus are not limitative of the present invention, and wherein:
Figure 1. demonstrates the chemical reactions in an alkaline anion exchange materials.
*Figure* 2. Features of the apparatus: 1=glass; 2=encapsulation material, for instance light transparent insulator or matrix; 3=photovoltaic; 4=Heat absorber or heat sink; 5=reversible water sorption material; 6=reduction gas unit; 7=reduction porous cathode; 8=ion exchange material; 9= oxidation porous anode; 10=oxidation gas unit; 11=inlet atmospheric air; 12=outlet for oxygen enriched atmospheric air during day; 13=reduction product; 14=reduction product collection outlet;
   Day/night operation of the module, 15= Air circulation during the night at high RH and low T; 16= water transport at high RH to 6 during night for adsorption of water by 5; 17=no air circulation during day at lower RH and higher T compared to 15; 18=high RH by water desorption in 5 at high T due to contact with 4 during day. 19 = light radiation absorbed by the solar cells. 20 = light radiation for instance infrared absorbed by the heat absorber or beat sink (4).
Figure 3. Example of water adsorption/desorption isotherm on silica gel. R. S. Mikhail and F. A. Shebl, J. Colloid Interface Sci, 1970, 34, 65-75.¹⁰
Figure 4. Example of water adsorption/desorption isotherm on 3 silica gels. X. Li, Z. Li, Q. Xia and H. Xi, Appl. Therm. Eng., 2007, 27, 869-876.¹¹
Figure 5. Example of water adsorption/desorption isotherm on silica gel. K. S. W. Sing and J. D. Madeley, J. Appl Chem., 1954,4, 365...368.¹²

### References to the application

1) Ayers, K. E.; Anderson, E. B.; Capuano, C. B.; Carter, B. D.; Dalton, L. T.; Hanlon, G.; Manco, J.; Niedzwiecki, M. Research Advances Towards Low Cost. High Efficiency PEM Electrolysis. ECS Trans. 2010, 33 (1), 3-15.
(2) Kumari, S.; White, R. T.; Kumar, B.; Spurgeon, J. M. Solar Hydrogen Production from Seawater Vapor Electrolysis. Energy Environ. Sci. 2016, 9, 1725-1733.
(3) Sathre, R.; Scown, C. D.; Morrow, W. R.; Stevens, J. C.; Sharp, I. D.; Ager, J. W.; Walezak, K. A.; Houle, F. a.; Greenblatt, J. B. Life-Cycle Net Energy Assessment of Large-Scale Hydrogen Production via Photoelectrochemical Water Splitting. Energy Environ. Sci. 2014, 7 (10), 3264...3278.
(4) Naughton, M. S.; Brushett, F. R.; Kenis, P. J. A. Carbonate Resilience of Flowing Electrolyte-Based Alkaline Fuel Cells. J. Power Sources 2011,196 (4), 1762-1768.
(5) Leng, Y.; Chen, G.; Mendoza, A. J.; Tighe, T. B.; Hickner, M. a.; Wang, C. Y. Solid-State Water Electrolysis with an Alkaline Membrane. J. Am, Chem. Soc. 2012, 134 (22), 9054-9057.
(6) Spurgeon, J. M.; Lewis, N. S. Proton Exchange Membrane Electrolysis Sustained by Water Vapor. Energy Environ. Sci. 2011, 4 (8), 2993.
(7). Greenway, S. D.; Fox, E. B.; Ekechukwu, A. A. Proton Exchange Membrane (PEM) Electrolyzer Operation under Anode Liquid and Cathode Vapor Feed Configurations. Int. J. Hydrogen Energy 2009, 34 (16), 6603...6608.
(8) Sawada, S.; Yamaki, T.; Maeno, T.; Asano, M.; Suzuki, A.; Terai, T.; Maekawa, Y. Solid Polymer Electrolyte Water Electrolysis Systems for Hydrogen Production Based on Our Newly Developed Membranes, Part I: Analysis of Voltage-Current Characteristics. Prog. Nucl. Energy 2008, 50 (2-6), 443-448.
(9) Kim, H.; Yang, S.; Rao, S. R.; Narayanan, S.; Yapustin, E. A.; Furukawa, H.; Umans, A. S.; Yaghi, O. M.; Wang, B. N. Water Harvesting from Air with Metal-Organic Frameworks Powered by Natural Sunlight. Science 2017. 8743 (April), 1-10.
(10) Mikhail, R. S.; Shebl, F. A. Adsorption in Relation to Pore Structures of Silicas II. Water Vapor Adsorption on Wide-Pore and Microporous Silica Gels. J. Colloid Interface Sci. 1970, 34 (1), 65-75.
(11) Li, X.; Li, Z.; Xia, Q.; Xi, H. Effects of Pore Sizes of Porous Silica Gels on Desorption Activation Energy of Water Vapour. Appl Therm. Eng. 2007, 27 (5-6), 869-876.
(12) Sing. K. S. W.; Madeley, J. D. The Surface Properties of Silica Gels .2. Adsorption of Water Vapour. J. Appl Chem. 1954, 4(7), 365-368.

## Claims

1. An apparatus **(22),** comprising an array of electrically connected space separated solar cells encapsulated in a light transparent insulator that lays on heat sink **(4)** which heat sink **(4)** lays on a reversible water sorption component **(5)** and whereby the reversible water sorption component **(5)** for water vapour exchange at another side contacts a reaction unit whereby the reaction unit further comprises a reduction reaction gas unit **(6)** in part or in total formed or occluded by a porous cathode **(7)** and a water oxidation reaction gas unit **(10)** in part or in total formed or occluded by a porous anode **(9)** and whereby the porous cathode (7) and the porous anode **(9)** are separated by an ion exchange material.

2. The apparatus according to claim 1, whereby the reversible water sorption component **(5)** forms a wall with the reduction reaction gas unit, or shares a permeable enclosing element with the reduction reaction gas unit.

3. The apparatus according to claim 1, whereby the anode **(9)** and cathode (7) are electrically connected with a source of electricity, or wherein the apparatus comprises the series of solar cells or arrays of solar cells whereby series of solar cells or arrays of solar cells are electrically connected to anode **(9)** and cathode (7).

4. The apparatus according to any one of the claims 1 to 3, **characterised in that** the reaction unit is a chamber, container or enclosure and/or the gas unit **(6, 10)** is a chamber, container or enclosure.

5. The apparatus according to any one of the claims 1 to 4, whereby the ion exchange component **(8)** is an anion exchange component and/or a cation exchange component.

6. The apparatus according to any one of the claims 1 to 5, whereby the water oxidation reaction gas unit **(10)** is adapted to function as a convection gas conduit because it is an elongated container or enclosure with at least one aperture at one extended side and with at least one aperture at another extended side of said water oxidation reaction gas unit **(10)** container.

7. The apparatus according to any one of the claims 1 to 6, whereby the reduction gas unit **(6)** comprises a vent which comprises self-opening and self-closing closure, for instance a self-opening or self-closing lid, shutter or cover for opening or closing said vent.

8. The apparatus according to claim 7, further comprising a programmable regulator or actuator functionally connected to the closure.

9. The apparatus according to claim 8, whereby the regulator or actuator is programmed to open the closure during the night for water adsorption by the reversible water sorption component **(5)** and to close the closure during the day thereby preventing dehydration of the reversible water sorption component **(5).**

10. The apparatus according to any one of the claims 8 to 9, further comprising a humidity sensor and/or a light sensor functionally connected to said regulator or actuator.

11. The apparatus according to any one of the claims 1 to 10, whereby the heat sink (4) does not comprise a phase transition material.

12. The apparatus according to any one of the claims 1 to 11, whereby the reversible water sorption component **(5)** is demountable so that it can be replaced by another reversible water sorption component **(5)** with the same, similar or other capabilities.

13. The apparatus according to any one of the claims 1 to 12, whereby the reversible water sorption component **(5)** comprises a hygroscopic substance and/or hydrophilic material and/or an hydrophilic powder and/or a porous hydrophilic material and/or a mesoporous hydrophilic material and/or a microporous hydrophilic material and/or a mixed microporous / microporous hydrophilic material.

14. The apparatus according to any one of the claims 1 to 13, comprising the series of solar cells or arrays of solar cells, whereby the solar cells or arrays of solar cells are comprised in an unit that is demountable from the hydrogen producing unit.

15. The use of the apparatus according to any one of the previous claims for oxygen and hydrogen production from ambient air.

## Patentansprüche

1. Einrichtung **(22),** umfassend eine Anordnung von elektrisch verbundenen, raumgetrennten Solarzellen, die in einem lichtdurchlässigen Isolator eingekapselt sind, der auf einem Kühlkörper **(4)** liegt, wobei der Kühlkörper **(4)** auf einer reversiblen Wassersorptionskomponente **(5)** liegt und wobei die reversible Wassersorptionskomponente **(5)** für einen Wasserdampfaustausch auf einer anderen Seite eine Reaktionseinheit berührt, wobei die Reaktionseinheit weiter eine Reduktionsreaktionsgaseinheit **(6)** umfasst, die ganz oder teilweise durch eine poröse Kathode **(7)** gebildet oder verdeckt ist, und eine Wasseroxidationsreaktionsgaseinheit **(10),** die ganz oder teilweise durch eine poröse Anode **(9)** gebildet oder verdeckt ist, und wobei die poröse Kathode **(7)** und die poröse Anode **(9)** durch ein Ionenaustauschmaterial getrennt sind.

2. Einrichtung nach Anspruch 1, wobei die reversible Wassersorptionskomponente **(5)** mit der Reduktionsreaktionsgaseinheit eine Wand bildet oder sich mit der Reduktionsreaktionsgaseinheit ein permeables Umhüllungselement teilt.

3. Einrichtung nach Anspruch 1, wobei die Anode **(9)** und die Kathode **(7)** elektrisch mit einer Stromquelle verbunden sind, oder wobei die Vorrichtung die Reihe von Solarzellen oder Felder von Solarzellen umfasst, wobei die Reihe von Solarzellen oder Felder von Solarzellen elektrisch mit Anode **(9)** und Kathode **(7)** verbunden sind.

4. Einrichtung nach einem der Ansprüche 1 bis 3, **dadurch gekennzeichnet, dass** die Reaktionseinheit eine Kammer, ein Behälter oder Gehäuse und/oder die Gaseinheit (**6, 10**) eine Kammer, ein Behälter oder ein Gehäuse ist.

5. Einrichtung nach einem der Ansprüche 1 bis 4, wobei die Ionenaustauschkomponente **(8)** eine Anionenaustauschkomponente und/oder eine Kationenaustauschkomponente ist.

6. Einrichtung nach einem der Ansprüche 1 bis 5, wobei die Wasseroxidationsreaktionsgaseinheit **(10)** als Konvektionsgasleitung ausgebildet ist, weil sie ein länglicher Behälter oder Gehäuse mit mindestens einer Öffnung an einer verlängerten Seite und mit mindestens einer Öffnung an einer anderen verlängerten Seite des Behälters **(10)** der Wasseroxidationsreaktionsgaseinheit ist.

7. Einrichtung nach einem der Ansprüche 1 bis 6, wobei die Reduktionsgaseinheit **(6)** eine Lüftungsöffnung umfasst, die einen selbstöffnenden und selbstschließenden Verschluss umfasst, zum Beispiel einen selbstöffnenden oder selbstschließenden Deckel, Verschluss oder eine selbstöffnende oder selbstschließende Abdeckung zum Öffnen oder Schließen der Lüftungsöffnung.

8. Einrichtung nach Anspruch 7, weiter umfassend einen programmierbaren Regler oder ein programmierbares Stellglied, der/das funktionell mit dem Verschluss verbunden ist.

9. Einrichtung nach Anspruch 8, wobei der Regler oder das Stellglied programmiert ist, um den Verschluss während der Nacht zur Wasseradsorption durch die reversible Wassersorptionskomponente **(5)** zu öffnen und den Verschluss während des Tages zu schließen, wodurch eine Austrocknung der reversiblen Wassersorptionskomponente **(5)** verhindert wird.

10. Einrichtung nach einem der Ansprüche 8 bis 9, weiter umfassend einen Feuchtigkeitssensor und/oder einen Lichtsensor, der funktionell mit dem Regler oder Stellglied verbunden ist.

11. Einrichtung nach einem der Ansprüche 1 bis 10, wobei der Kühlkörper **(4)** kein Phasenübergangsmaterial umfasst.

12. Einrichtung nach einem der Ansprüche 1 bis 11, wobei die reversible Wassersorptionskomponente **(5)** zerlegbar ist, so dass sie durch eine andere reversible Wassersorptionskomponente **(5)** mit gleichen, ähnlichen oder anderen Fähigkeiten ersetzt werden kann.

13. Einrichtung nach einem der Ansprüche 1 bis 12, wobei die reversible Wassersorptionskomponente **(5)** eine hygroskopische Substanz und/oder ein hydrophiles Material und/oder ein hydrophiles Pulver und/oder ein poröses hydrophiles Material und/oder ein mesoporöses hydrophiles Material und/oder ein mikroporöses hydrophiles Material und/oder ein gemischtes mikroporöses / mikroporöses hydrophiles Material umfasst.

14. Vorrichtung nach einem der Ansprüche 1 bis 13, umfassend die Reihe von Solarzellen oder Felder von Solarzellen, wobei die Solarzellen oder Felder von Solarzellen in einer Einheit enthalten sind, die von der Wasserstofferzeugungseinheit demontierbar ist.

15. Verwendung der Vorrichtung nach einem der vorstehenden Ansprüche an die Sauerstoff- und Wasserstofferzeugung aus der Umgebungsluft.

## Revendications

1. Appareil **(22)** comprenant un réseau de cellules solaires raccordées électriquement séparées par des espaces encapsulées dans un isolant transparent à la lumière qui se met sur un dissipateur de chaleur **(4),** lequel dissipateur de chaleur (4) se met sur un composant de sorption d'eau réversible **(5)** et, au moyen duquel, le composant de sorption d'eau réversible **(5)** pour un échange de vapeur d'eau sur un autre côté vient en contact avec une unité de réaction, au moyen duquel l'unité de réaction comprend en outre une unité de gaz de réaction de réduction **(6)** en partie ou en totalité formée ou obturée par une cathode poreuse **(7)** et une unité de gaz de réaction d'oxydation d'eau **(10)** en partie ou en totalité formée ou obturée par une anode poreuse **(9)** et au moyen duquel la cathode poreuse **(7)** et l'anode poreuse **(9)** sont séparées par un matériau d'échange d'ions.

2. Appareil selon la revendication 1, au moyen duquel le composant de sorption d'eau réversible **(5)** forme une paroi avec l'unité de gaz de réaction de réduction ou partage un élément de fermeture perméable avec l'unité de gaz de réaction de réduction.

3. Appareil selon la revendication 1, au moyen duquel l'anode **(9)** et la cathode **(7)** sont raccordées électriquement à une source d'électricité ou dans lequel l'appareil comprend les séries de cellules solaires ou des réseaux de cellules solaires, au moyen duquel des séries de cellules solaires ou des réseaux de cellules solaires sont raccordées électriquement à une anode **(9)** ou à une cathode **(7).**

4. Appareil selon l'une quelconque des revendications 1 à 3, **caractérisé en ce que** l'unité de réaction est une chambre, un récipient ou une enceinte et/ou l'unité de gaz (6, 10) est une chambre, un récipient ou une enceinte.

5. Appareil selon l'une quelconque des revendications 1 à 4, au moyen duquel le composant d'échange d'ions **(8)** est un composant d'échange d'anions et/ou un composant d'échange de cations.

6. Appareil selon l'une quelconque des revendications 1 à 5, au moyen duquel l'unité de gaz de réaction d'oxydation d'eau **(10)** est conçue pour faire office de conduite de gaz de convection parce qu'elle constitue un récipient allongé, ou une enceinte allongée, ayant au moins un orifice sur un côté étendu et ayant au moins un orifice sur un autre côté étendu dudit récipient d'unité de gaz de réaction d'oxydation d'eau **(10).**

7. Appareil selon l'une quelconque des revendications 1 à 6, au moyen duquel l'unité de gaz de réduction **(6)** comprend un évent qui comprend une fermeture à ouverture automatique et à fermeture automatique, par exemple un couvercle, un volet obturateur ou un capot à ouverture automatique et à fermeture automatique pour ouvrir ou fermer ledit évent.

8. Appareil selon la revendication 7, comprenant en outre un régulateur, ou un actionneur, programmable raccordé de manière fonctionnelle à la fermeture.

9. Appareil selon la revendication 8, au moyen duquel le régulateur, ou l'actionneur, est programmé pour ouvrir la fermeture pendant la nuit pour permettre une adsorption d'eau par le composant de sorption d'eau réversible **(5)** et pour fermer la fermeture pendant le jour, ce qui empêche la déshydratation du composant de sorption d'eau réversible **(5).**

10. Appareil selon l'une quelconque des revendications 8 à 9, comprenant en outre un capteur d'humidité et/ou un capteur de lumière raccordés de manière fonctionnelle au dit régulateur ou au dit actionneur.

11. Appareil selon l'une quelconque des revendications 1 à 10, au moyen duquel le dissipateur de chaleur (4) ne comprend pas un matériau de transition de phase.

12. Appareil selon l'une quelconque des revendications 1 à 11, au moyen duquel le composant de sorption d'eau réversible **(5)** peut être démonté de telle sorte qu'il puisse être remplacée par un autre composant de sorption d'eau réversible **(5)** ayant les mêmes capacités, ou des capacités similaires ou d'autres capacités.

13. Appareil selon l'une quelconque des revendications 1 à 12, au moyen duquel le composant de sorption d'eau réversible **(5)** comprend une substance hygroscopique et/ou un matériau hydrophile et/ou une poudre hydrophile et/ou un matériau hydrophile poreux et/ou un matériau hydrophile mésoporeux et/ou un matériau hydrophile microporeux et/ou un matériau microporeux/hydrophile microporeux mixte.

14. Appareil selon l'une quelconque des revendications 1 à 13, comprenant les séries de cellules solaires ou les réseaux de cellules solaires, au moyen duquel les cellules solaires sont incluses, ou les réseaux de cellules solaires sont inclus, dans une unité qui peut être démontée de l'unité de production d'hydrogène.

15. Utilisation de l'appareil selon l'une quelconque des revendications précédentes pour une production d'oxygène et d'hydrogène à partir de l'air ambiant.
